# EUROPÄISCHE PATENTANMELDUNG

(11) **EP 0 852 907 A2**
(43) Veröffentlichungstag der Anmeldung: **15.07.1998**
(21) Anmeldenummer: 97118699.4
(22) Anmeldetag: 28.10.1997
(51) Int. Cl.: A21D 10/00

(54) **Vorteig für Vollkornbrot**

(30) Priorität: 06.12.1996 DE 19650666
(71) Anmelder: Leupoldt, Franz, 95163 Weissenstadt (DE)
(72) Erfinder: Leupoldt, Franz, 95163 Weissenstadt (DE)
(74) Vertreter: Zahn, Roland, Dipl.-Ing.

(57) **Zusammenfassung**

In Verbindung mit einem Vorteig für Vollkornbrot oder ähnliche Spezialbrote, hergestellt aus gereinigtem, und mehr oder weniger grob vermahlenem Roggen und/oder Weizen, die mit Wasser verquollen werden, sowie gegebenenfalls Salz und Sauerteig wird vorgeschlagen, daß der Vorteig in einer Verpackung luftdicht abgefüllt und pasteurisiert ist, daß er bei Raumtemperatur lagerfähiger ist, und daß er durch Beimischung weiterer Getreidemahlerzeugnisse, wie zum Beispiel Roggen und/oder Weizen, sowie Wasser, Hefe und anderen Zutaten in einen backfertigen Brotteig überführbar ist. Alternativ hierzu ist vorgeschlagen, daß der Vorteig nach dem Verquellen erhitzt und in erhitztem Zustand keimfrei abgefüllt wird.

## Beschreibung

Die Erfindung betrifft einen Vorteig für Vollkornbrot oder dergleichen Spezialbrote, die aus gereinigtem und mehr oder weniger grob vermahlenem und mit Wasser verquollenem Roggen und/oder Weizen sowie Salz und Sauerteig hergestellt sind, sowie ein Verfahren zur Herstellung dieses Vorteigs nach dem Oberbegriff des Patentanspruchs 3.

Vollkornbrot und -brötchen erfreuen sich schon seit langer Zeit immer noch zunehmender Beliebtheit, was nicht nur auf den im Vergleich zum Weißbrot kräftigeren und herzhafteren Geschmack zurückzuführen ist, sondern ebenso auf den wesentlich höheren Gehalt an Mineralstoffen, Vitaminen und Ballaststoffen und das zunehmende Ernährungsbewußtsein der Verbraucher.

Für kleinere Bäckereien und erst recht für Privathaushalte ist es jedoch außerordentlich schwierig, echte Vollkornbrote oder ähnliche Spezialbrote herzustellen. Dies liegt hauptsächlich daran, daß die Zubereitung von Teigen mit groberen Mahlerzeugnisse im Vergleich zu Mehlteigen wesentlich zeit- und arbeitsaufwendiger ist und spezielle Techniken erfordert. So sollte beispielsweise das Getreide erst unmittelbar vor der Herstellung des Vorteigs bzw. Endteigs gemahlen werden, da nur frisch gemahlenes Vollkornmehl alle wertvollen Nährstoffe enthält und sauerstoffempfindliche Vitamine bei Lagerung rasch zerstört werden. Aufgrund der größeren Quellfähigkeit brauchen Vollkorn-(vor-)teige mehr Flüssigkeit als andere Mehlteige und müssen erheblich langsamer aber andauernder geknetet werden, was in der Regel nur mit speziellen Knetmaschinen befriedigend zu bewerkstelligen ist.

Es sind zwar lagerstabile, backfertige Teigmischungen bekannt, z.B. fett- und texturiermittelhaltige Teige, insbesondere für Kuchen und Pasteten, aus der DE 37 00 515 A1 und vorgebackenen Brotteige aus der EP 0 299 153 A1. Diese backfertigen Teige haben aber den vorstehend bereits erwähnten Nachteil, daß das zu ihrer Herstellung verwendete Getreide, selbst wenn es sich um Vollkornmehl handelt, durch die Lagerung viele der wertvollen Nährstoffe und vor allem sauerstoffempfindliche Vitamine verliert.

Mit den im Stand der Technik, beispielsweise aus der DE 35 04 686 A1 bekannten, lagerfähigen und gebrauchsfertigen Sauerteig-Mehl-Mischungen ist das genannte Problem auch nicht zu lösen, denn diese Mischungen stellen nur eine der Zutaten für den Vorteig eines Vollkornbrotes dar. Die mit dar Fertigstellung des Vorteigs verbundenen aufwendigen Quell- und Knetvorgänge werden durch die vorbereiteten Sauerteig-Mehl-Mischung nicht vermieden.

Es ist daher eine Aufgabe der vorliegenden Erfindung, einen Vollkornbrotteig zu schaffen bzw. ein Verfahren zu dessen Herstellung anzugeben, mit dem es möglich ist, auch in kleineren Bäckereibetrieben oder im Privathaushalt ein geschmacklich und ernährungsphysiologisch hochwertiges Vollkornbrot oder ähnliches Spezialbrot in beliebig kleiner oder großer Stückzahl ohne besonderen Zeit- und Arbeitsaufwand herzustellen.

Eine Lösung dieser Aufgabe besteht in der Bereitstellung eines Vorteigs der eingangs genannten Art, der in einer Verpackung luftdicht abgefüllt und pasteurisiert ist, und der durch Vermischen mit Wasser, weiteren Getreidemahlerzeunissen und Hefe, sowie sonstigen Zutaten zu einem backfertigen Brotteig verarbeitbar ist.

Eine weitere Lösung der vorgenannten Aufgabe besteht darin, daß der Vorteig erhitzt und im erhitzten Zustand aseptisch in einer Verpackung abgefüllt und daß er durch Beimischung weiterer Getreidemahlerzeugnisse, sowie Wasser, Hefe und anderen Zutaten in einen backfertigen Brotteig überführbar ist.

Eine Lösung der Aufgabe besteht auch in der Bereitstellung eines Verfahrens zur Herstellung eines vorteigs der eingangs genannten Art, bei dem man Getreidemahlerzeugnisse unter Zugabe von Wasser mit Sauerteig und Salz versetzt, diesen Teigansatz bzw. Vorteig verquellen läßt und ihn anschließend entweder luftdicht in eine Verpackung abfüllt und in dieser Verpackung pasteurisiert, oder erhitzt und im erhitzten Zustand aseptisch in eine Verpackung abfüllt, so daß der Vorteig selbst bei Raumtemperatur, d.h. ohne Kühlung, verhältnismäßig lange Zeit lagerfähig ist. Zur Herstellung eines backfertigen Brotteigs müssen nur noch Wasser, weitere Getreidemahlerzeugnisse, Hefe und gegebenenfalls weitere gewünschte Zutaten, wie zum Beispiel Sonnenblumenkerne, Leinsaat u.ä. untergeknetet werden.

Der erfindungsgemäße Vorteig und das erfindungsgemäße Verfahren haben vor allem die Vorteile, daß der Bäcker keine Vollkornmahlerzeugnisse einlagern muß, keine Kenntnisse in der Vollkorn-Bäckerei besitzen muß, keine speziellen, d.h. im Normalbetrieb langsam laufenden Vollkornknetmaschinen benötigt, und den mit der Zubereitung des Vollkorn-Vorteigs verbundenen Zeit- und Arbeitsaufwand spart, der u.U. erheblich sein kann, beispielsweise wenn ein Anbrühen oder Vorquellen des groben Vollkornschrotes erforderlich ist. Zur Herstellung eines backfertigen Vollkorn-Brotteigs mit einfachen Knetmaschinen müßte er dann nur noch Wasser, etwas Vollkornmehl und Hefe unterkneten; dies sind alles Zutaten, die problemlos selbst in einem Privathaushalt bereitgestellt werden können, d.h. man kann dann den Brotleib formen und sofort anschließend backen.

Um eine optimale Erhaltung der in dem Vollkorn enthaltenen Mineralien, Vitamine und sonstigen Nährstoffe zu gewährleisten, sollte der verquollenen Vorteig im wesentlichen keimfrei in die Verpackung eingefüllt sein/werden. Aus dem gleichen Grunde sollte die Verpackung dicht verschlossen sein.

Bei einer bevorzugten Ausführungsform der Erfindung ist als Verpackung ein - vorzugsweise nahtloser - Folienschlauch vorgesehen. Solche Folienschläuche sind beispielsweise auch als Wursthüllen bekannt und werden für diese Zwecke in großtechnischem Maßstab und aus den verschiedensten Materialien hergestellt und vertrieben.

Die Erfindung wird im folgenden anhand eines Ausführungsbeispiels näher erläutert.

### Beispiel 1:

Für einen erfindungsgemäßen Vorteig für Vollkornbrot wird intensiv gereinigtes Roggenvollkorn (und/oder Weizenvollkorn) mehr oder weniger grob vermahlen (zu Schrot oder Gries), unter Zugabe von Wasser und Salz mit einem nach der klassischen Drei-Stufen-Methode zubereiteten Sauerteig versetzt und quellen gelassen. Der intensiv verquollene Vorteig wird in Folienschläuche gefüllt und einem Pasteurisierungsprozeß unterworfen. Danach ist er lange Zeit (mehrere Wochen) auch ohne Kühlung und ohne jegliche Qualitätseinbußen haltbar.

Bei Bedarf wird die Folienhülle entfernt, der Vorteig in eine Knetschüssel gegeben und unter allmählichem Zugeben von Wasser, Getreidemahlerzeugnissen und Hefe, per Hand oder maschinell, zu einem sofort verarbeitungsfertigen Brotteig verknetet, der unmittelbar anschließend geformt und gebacken werden kann.

### Beispiel 2:

Die Vorbereitung des Vorteigs entspricht der gemäß dem Beispiel 1. Der intensiv verquollene Vorteig wird anschließend jedoch bis ca. 80...100 °C erhitzt und im erhitzten Zustand aseptisch abgefüllt.

Der Unterschied und Vorteil dem Beispiel 1 gegenüber ist darin zu sehen, daß der Vorteig nicht in der Verpackung erhitzt wird, sondern im erhitzten Zustand abgefüllt wird. Damit wird das Risiko umgangen, daß die Verpackung während der Erhitzung Schaden nimmt. Auch läßt sich auf der Grundlage des nach Beispiel 2 behandelten Vorteigs, dieser vor der Portionierung als größere Einheit erhitzen, was im Hinblick auf eine großtechnische Herstellung von Vorteil ist.

## Patentansprüche

1. Vorteig für Vollkornbrot oder ähnliche Spezialbrote, hergestellt aus gereinigtem und mehr oder weniger grob vermahlenem und mit Wasser verquollenem Roggen und/oder Weizen sowie Salz und Sauerteig,
dadurch gekennzeichnet,
daß der Vorteig in einer Verpackung luftdicht abgefüllt und pasteurisiert ist, und daß er durch Beimischung weiterer Getreidemahlerzeugnisse, sowie Wasser, Hefe und anderen Zutaten in einen backfertigen Brotteig überführbar ist.

2. Vorteig für Vollkornbrot oder ähnliche Spezialbrote, hergestellt aus gereinigtem und mehr oder weniger grob vermahlenem und mit Wasser verquollenem Roggen und/oder Weizen sowie Salz und Sauerteig,
dadurch gekennzeichnet,
daß der Vorteig erhitzt und im erhitzten Zustand aseptisch in einer Verpackung abgefüllt ist, und daß er durch Beimischung weiterer Getreidemahlerzeugnisse, sowie Wasser, Hefe und anderen Zutaten in einen backfertigen Brotteig überführbar ist.

3. Verfahren zur Herstellung eines Vorteigs für Vollkornbrot oder ähnliche Spezialbrote nach Anspruch 1 oder 2, bei dem gereinigter Roggen und/oder Weizen vermahlen und unter Zugabe von Wasser mit Sauerteig und Salz versetzt und verquollen wird,
dadurch gekennzeichnet,
daß der verquollene Vorteig entweder luftdicht in eine Verpackung abgefüllt und in dieser Verpackung pasteurisiert wird, oder daß er erhitzt und im erhitzten Zustand aseptisch in einer Verpackung abgefüllt wird.

4. Verfahren nach Anspruch 3,
dadurch gekennzeichnet,
daß der verquollene Vorteig im wesentlichen keimfrei in die Verpackung eingefüllt und diese luftdicht verschlossen wird.

5. Verfahren nach einem der Ansprüche 3 oder 4,
dadurch gekennzeichnet,
daß die Verpackung ein Folienschlauch ist.
